Europäisches Patentamt

European Patent Office

Office européen des brevets

(11) Publication number: **0 438 126 A2**

## EUROPEAN PATENT APPLICATION

(21) Application number: **91100433.1**

(22) Date of filing: **16.01.91**

(51) Int. Cl.⁵: **G06F 9/38**

(30) Priority: **17.01.90 JP 6383/90**

(43) Date of publication of application:
**24.07.91 Bulletin 91/30**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Nogami, Kazutaka**
**3-12-23-221 Ootaya, Adachi-ku**
**Tckyo(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) Pipeline type digital signal processing device.

(57) Disclosed is a pipeline type digital signal processing device having a plurality of pipeline stages in which at least one of the stages, comprises a first unit circuit (22a), a second unit circuit (22b) located at a rear portion of the first unit circuit (22a), a first latch circuit (30a) located between the first unit circuit (22a) and the second unit circuit (22b), and a second latch circuit (30b) installed between the the second unit circuit (22b) and a next stage (24) and an output of the first latch circuit (30a) is given to the second unit circuit (22b), wherein an output of the second unit circuit (22b) is applied to the second latch circuit (30b), an operation of the first latch circuit (30a) is controlled by a first clock signal and an operation of the second latch circuit (30b) is controlled by a second clock signal which is a reversed clock signal as a reversed phase of the first clock signal.

# FIG.2

## PIPELINE TYPE DIGITAL SIGNAL PROCESSING DEVICE

### BACKGROUND OF THE INVENTION

#### 1. Field of the Invention

This invention relates to a digital signal processing device, more particularly to a pipeline type digital signal processing device comprising a plurality of stages.

#### 2. Description of the Prior Art

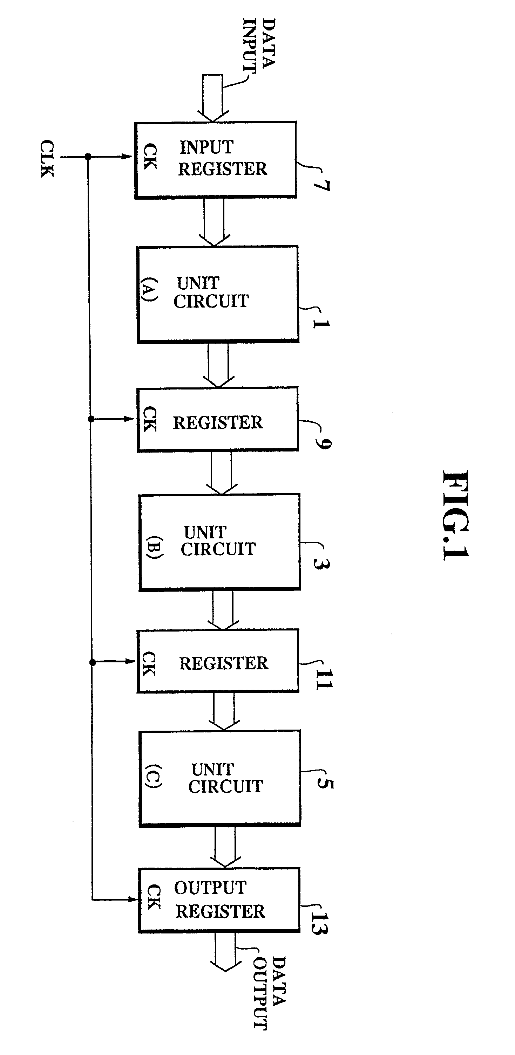

Fig. 1 is a block diagram of a pipeline type digital signal processing device conventionally used.

In the same diagram, reference numbers 1, 3, and 5 designate unit circuits, a reference number 7 denotes an input register, a reference number 13 is an output register, and reference numbers 9 and 11 are registers.

The unit circuits 1, 3, and 5 are connected to one another through the input register 7, the output register 13, and the other registers 9 and 11 in series. The unit circuits 1, 3, and 5 are stages of the pipeline type digital signal processing device. This way, a circuit block having a certain function in the conventional digital signal processing device is divided into the many stages such as the circuit units 1, 3, and 5, and the registers 9 or 11 is located between the unit 1, 3, or 5 so as to reduce the cycle time of the digital signal processing device.

Moreover, a delay time of each stage in the digital signal processing device is so equal to one another that the total cycle time of the digital signal processing device can be reduced approximately one third (1/3) times of a digital signal processing device which is not a pipeline type.

However, it is difficult to equal the delay time of each stage in the pipeline type digital signal processing device. In general, a circuit block in the digital signal processing device is divided into a plurality of stages each of which has a certain function, for example an arithmetic and logic unit (ALU) with a longer delay time or an unit for a writing operation for a register with a shorter delay time as the function.

Moreover, there is an unit having variable delay times caused by a condition of process in the digital signal processing device.

When the delay time of each stage is not equal to one another, the magnitude of the entire cycle time of the pipeline type digital signal processing device is determined by the stage having the largest delay time. Accordingly, whenever the delay time of the stages other than the stage having the largest delay time may be reduced, the magnitude of the entire delay time is never decreased.

On the other hand, there is a method so as to decrease the entire delay time of the digital signal processing device in which the number of stages obtained by dividing the circuit block thereof is increased. In the method, it is difficult and complex so as to execute a recover operation when any pipeline hazard is caused by a branch, a trap, an exception or other operations.

As described above, in order to decrease the entire delay time as the cycle time of the circuit block in the conventional pipeline type digital signal processing device, the delay time of each stage should be equaled to one another or the number of stages obtained by dividing the circuit block may be increased so that there is the problem in which it is difficult and complex so as to execute a recover operation when the pipeline hazard is caused by a branch, a trap, an exception or the other operations.

### SUMMARY OF THE INVENTION

Accordingly, an object of the present invention is to provide an improved pipeline type digital signal processing device which can reduce an entire cycle time thereof without increasing a new stage.

In order to achieve the object, a pipeline type digital signal processing device according to the present invention, having a plurality of pipeline stages in which at least one of the stages comprises a first unit circuit, a second unit circuit located at a rear portion of the first unit circuit, a first latch means located between the first unit circuit and the second unit circuit, and a second latch means installed between the second unit circuit and next stage and an output of the first latch means is given to the second unit circuit, wherein an output of the second unit circuit is applied to the second latch means, an operation of the first latch means is controlled by a first clock signal and an operation of the second latch means is controlled by a second clock signal which is a reversed clock signal as a reversed phase of the first clock signal.

Moreover the maximum delay time of the second unit circuit is shorter than that of the first unit circuit.

For example, this invention can be applied to the stage having the maximum delay time in a pipeline type digital signal processing device. The stage is divided into the first and second unit circuits and the first latch means is provided between these unit circuits and the second latch means is located between the second unit circuit and the next stage. These latch means are controlled by the first and second clock signals which are in reverse each other. Accordingly, when one of the latch means is in a through state or in an active state, the other is in locked state or in an inactive state. Namely, the two latch means can not be in the through state at the same time. The first unit circuit is executed in one cycle step and then the second unit circuit is operated in the next cycle step.

Thus, the operations of the first and second unit circuits are so controlled based on the first and second clock signals which are in reverse each other that faulty operations never occur.

Furthermore, the present invention is applied to the digital signal processing device having stages, for example the delay time of one of the stages is changed by an operational condition, as the delay time of each stage of the digital signal processing device can be uniformed.

The object, features and advantages of the present invention will be more apparent from the following description of a preferred embodiment, taken in conjunction with the accompanying drawing.

BRIEF DESCRIPTION OF THE DRAWINGS

Fig. 1 is a block diagram of a conventional pipeline type digital signal processing device;

Fig. 2 is a block diagram of a pipeline type digital processing device as a first embodiment according to the present invention;

Fig. 3 is a timing chart showing an operation of the pipeline type digital signal processing device as shown in Fig. 2;

Fig. 4 is a circuit diagram of a transparent latch used in the digital signal processing device as shown in Fig. 2;

Fig. 5 is a timing chart showing an operation of the digital signal processing device as shown in Fig. 2, which is executed with a more enlarged clock period than that of Fig. 3; and

Figs. 6 and 7 are block diagrams of a digital signal processing device as second and third embodiments according to the present invention.

DETAILED DESCRIPTION OF THE EMBODIMENTS

Hereinafter, embodiments according to the present invention will now be described referring to drawings.

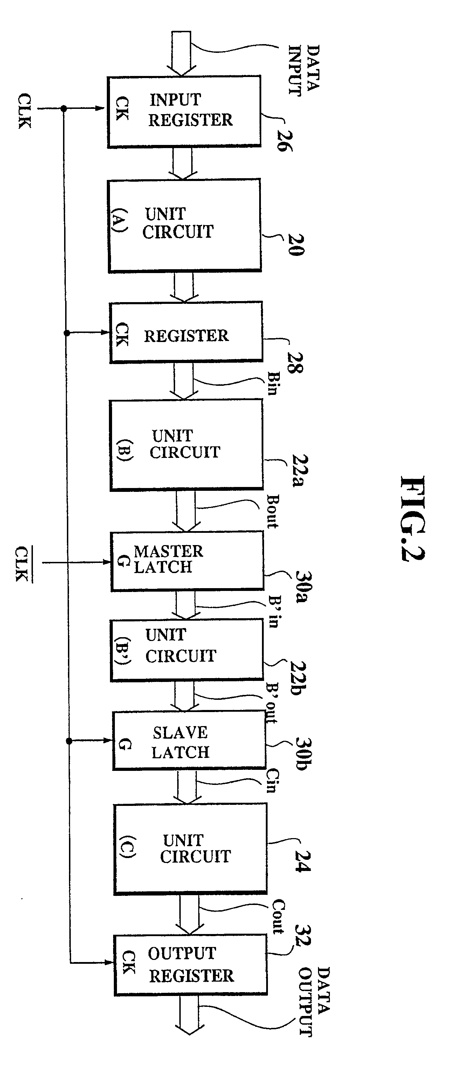

Fig. 2 is a block diagram of a pipeline type digital signal processing device based on a master-slave latch type as a first embodiment according to the present invention.

In the same diagram, a circuit block comprises an unit circuit 20, a first unit circuit 22a, a second unit circuit 22b, and an unit circuit 24. Namely, as a feature of this embodiment, the unit circuit 3 as the stage 3 of the conventional digital signal processing device as shown in Fig. 1 is divided into the first unit circuit 22a and the second unit circuit 22b in the present embodiment.

The unit circuits 22, 22a, 22b, and 24 are connected to one another in series through an input register 26, a register 28, a master latch 30a as a first latch means, a slave latch 30b as a second latch means, and an output register 32.

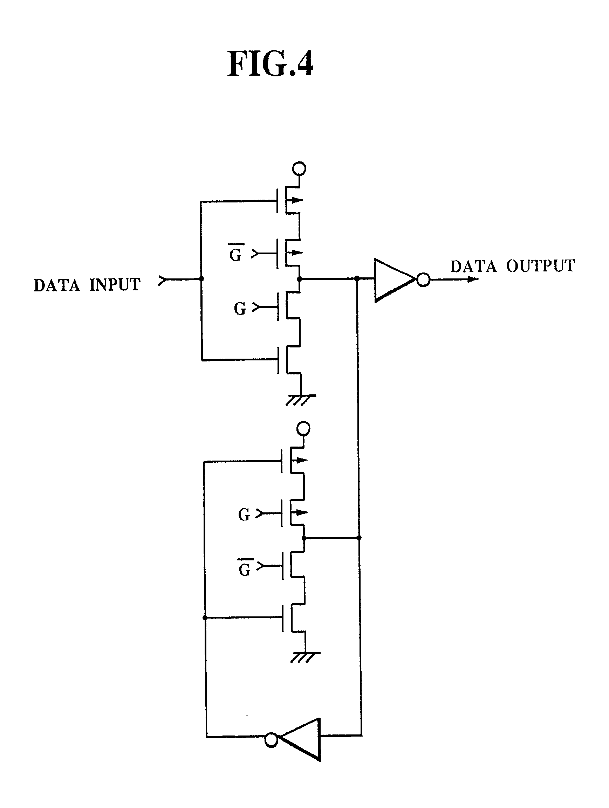

The master latch 30a and the slave latch 30b are made up of a transparent latch as shown in Fig. 4 showing a circuit diagram of the transparent latch formed with CMOS circuits.

In the same diagram, when a gate G is in a high level (H), a value of data IN as an input of the transparent latch is equal to an output thereof. On the other hand, when the value of the gate G is fallen in a low state (L), the transparent latch outputs a value of the data IN obtained at the falling edge of the gate G.

A clock signal (CLK) is applied to the input register 26, the register 28, the slave latch 30b, and the output register 32 so as to execute them under the same condition.

On the other hand, an inverted clock ($\overline{\text{CLK}}$) of the clock signal (CLK) is given to the master latch 30a.

Therefore while the master latch 30a is transparent, the operation of the slave latch 30b is locked. When the master latch 30a is locked, the slave latch is transparent, namely in the through state.

Next, operations of the pipeline type digital signal processing device having the construction described above according to the present embodiment are explained.

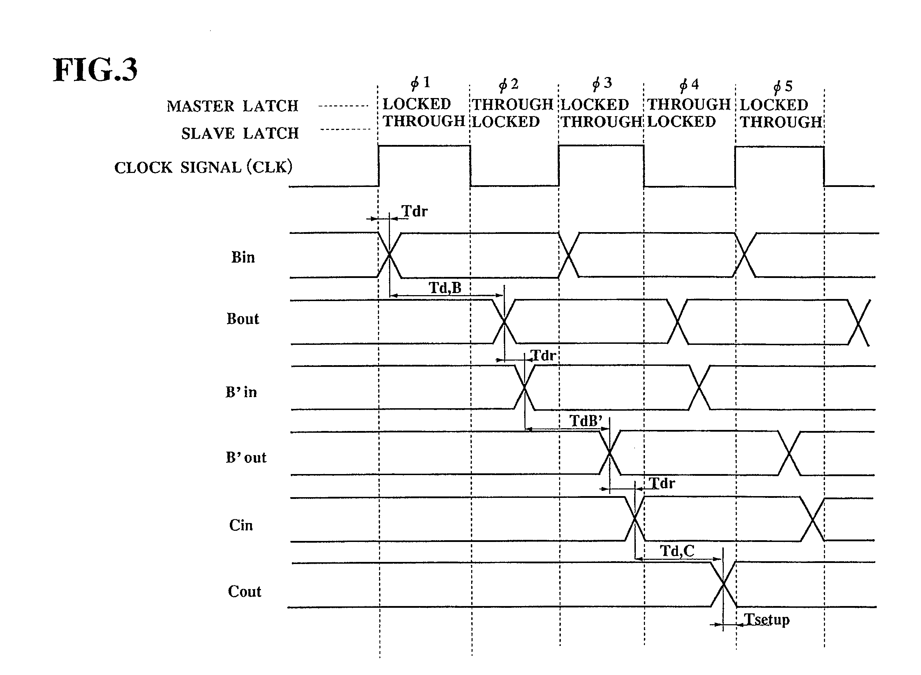

Fig. 3 shows a timing chart so as to explain the operation of the digital signal processing device of the first embodiment as shown in Fig. 2. Referring to the timing chart, a data flow of the circuit 22a through the unit circuit 24 is explained after the data IN is given to the unit circuit 20 as the first stage of the digital signal processing device, then to the unit circuit 22a as the next stage thereof.

In the timing chart, when the clock signal CLK is risen in the first half designated by $\phi$ I of a cycle, the unit circuit 22a inputs data Bin. After the unit circuit 22a obtains the data Bin and then a delay time Td,B of it is passed, an output of the unit circuit 22b is determined. At this time, the clock signal CLK is in the latter denoted by $\phi$ 2 of the cycle. The master latch 30a is in the through state so that the output Bout of the unit circuit 22a is given to the input B'in of the circuit unit 22b after an propagation delat, Tdr of the master latch 30a.

Next, after the time Td,B' from the valid input B'in, the unit circuit 22b outputs the valid B'out. At this time, as the cycle is in the first half $\phi$ 3 of the second cycle as shown in Fig. 3, the master latch 30a is in the lock state. On the other hand, the slave latch 30b is in the through state.

Accordingly, the output B'out is given to an input Cin of the unit circuit 24 through the slave latch 30b. After the delay time Td,c of the unit circuit 24, the output Cout is obtained.

The total cycle time Tcycle of the digital signal processing device described above is defined the following equation:

2 Tcycle = Td,B + Td,B' + Td,C + 3Tdr + Tsetup.

For example, when the delay time (Td,b, Td,B' and Td,C) of each unit circuit 22a, 22b, and 24 is equal one another, the execution time (Tdr) of the master latch 30a is equal to that of the slave latch 30b and the setup time (Tsetup) of each register 26, 28, and 32 is equal, the total cycle time of the digital signal processing device is given by the following:

Td ≡ Td,B = Td,B' = Td,C
Treg ≡ Tdr = Tsetup
Tcycle = 3/2 Td + 2 Treg.     (1)

By the way, in case where the operation described above is executed by the conventional digital signal processing device as shown in Fig, 1, namely a combinational circuit of the circuit units 22a and 22b in the first embodiment is equal to the circuit unit 3 as shown in Fig. 1, the delay time TdB conv. of the unit circuit 3 in the conventional digital signal processing device is:

Td,B conv. = Td,B + Td,B' = 2Td.

If we assume that the delay time of the unit circuit 3 is a critical rate-determining factor of the digital signal processing device, namely the maximum delay time in the stages in it, the total cycle time Tcycle conv. is:

Tcycle conv. = Td,B conv. + Tdr + Tsetup
= 2Td + 2Treg.     (2)

When the equation (1) is compared with the equation (2), it is clear that the cycle time of the first embodiment is one third Td times (1/2Td) as short as that of the conventional digital signal processing device.

Moreover, if we assume that the execution times and setup times of the register and latch circuits are adequately smaller than the delay time of each circuit unit, Td >> Treg, the rate between the equations (1) and (2) is:

Tcycle / Tcycle conv. = 3/2 Td / 2Td = 0.75.

As a result, the pipeline type digital signal processing device according to the present invention can reduce the cycle time approximately 25 % compared with that of the conventional digital signal processing device.

As described above, when the structure of the master and slave latch circuits based on the present invention is applied to the stage having the maximum delay time in the conventional digital signal processing device, a part of the maximum delay time can be shifted into the next cycle, such as $\phi$ 3 shown in Fig. 3, so as to reduce the total cycle time of the digital signal processing device.

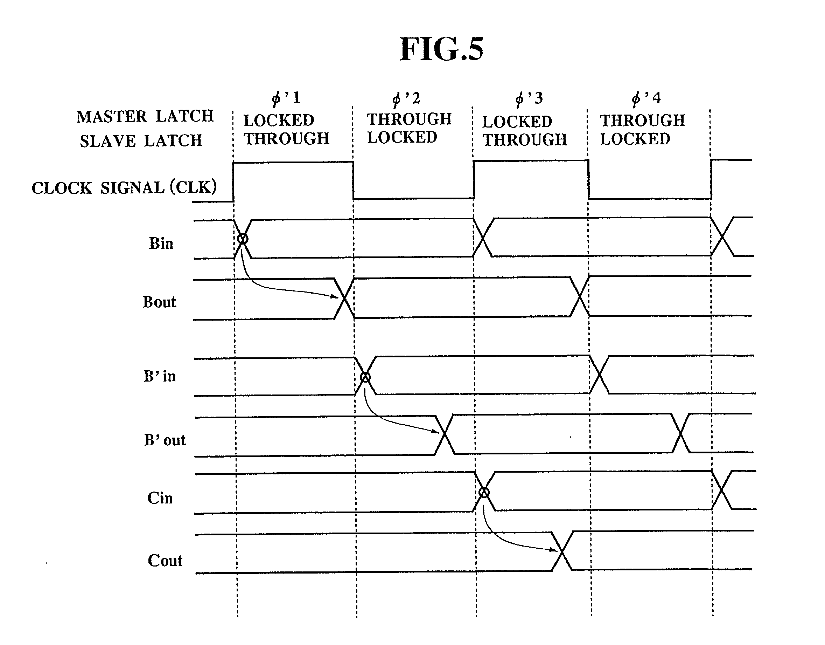

Fig. 5 is a timing chart of a digital signal processing device as the first embodiment according to the present invention having a relatively longer cycle time ( $\phi$ 1 < $\phi$ 1') compared to the cycle time as shown in Fig. 3. A structure of the digital signal processing device of this embodiment such as stages is same as that of the first embodiment. Only the cycle time is different each other. In one cycle, for instance in a cycle $\phi$ 1', the input data never flow through the unit circuit 22a, the master latch 30a, the unit circuit 22b, and the slave latch 30b even if the period of one cycle is longer than that of the first embodiment.

Namely, the input data flows in synchronization with the clock signal so that faulty operation of each stage can be eliminated in the digital signal processing device according to the present embodiment even if the period of the cycle time is longer than that of the device of the first embodiment. In such a case, as shown in Fig. 5, the operations of the digital signal processing device are executed in the period of the cycle time equal to that of the conventional digital signal processing device as shown in Fig. 1.

On the other hand, when the period of the cycle time is short, a part of a long delay time of a pipeline stage can be transferred into a cycle time of a next stage.

As described above by the first embodiment, the present invention can be reduced to the total operation time of the pipeline type digital signal processing device.

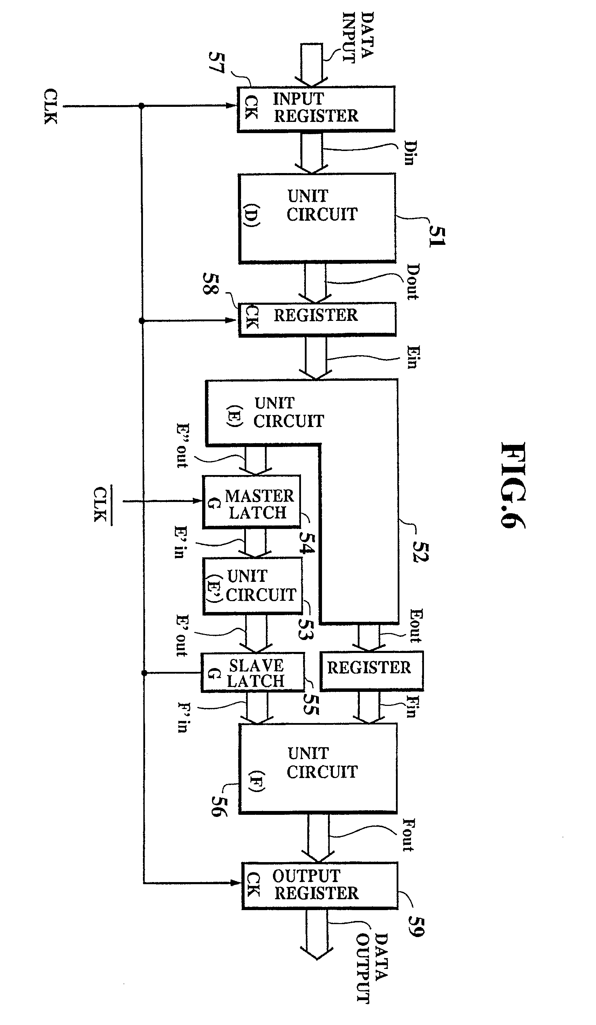

Fig. 6 is a block diagram of a pipeline type digital signal processing device as a second embodiment according to the present invention.

In this embodiment, a part E'out of an output of a second stage 52 is given into an unit circuit 53, a master latch 54 is installed in a front portion of the circuit unit 53, and a slave latch 55 is provided in a rear portion of the unit circuit 53. A clock signal is applied into an input register 57, a register 58, the slave latch 55, and an output register 59. While, a reversed clock signal as a reversed phase of the clock signal is given into the master latch 54.

In the digital signal processing device having the structure described above, only one part of the output signal E'out is given to the unit circuit 53, and the remaining part of the output signal E'out is applied into the unit circuit 52 which is used in the conventional digital signal processing device as shown in Fig. 1 and then processed by it.

Thus, only the stage having the critical path can be processed by the unit circuit 53 based on the present embodiment so that the unit circuit to be divided can be constructed on a small size.

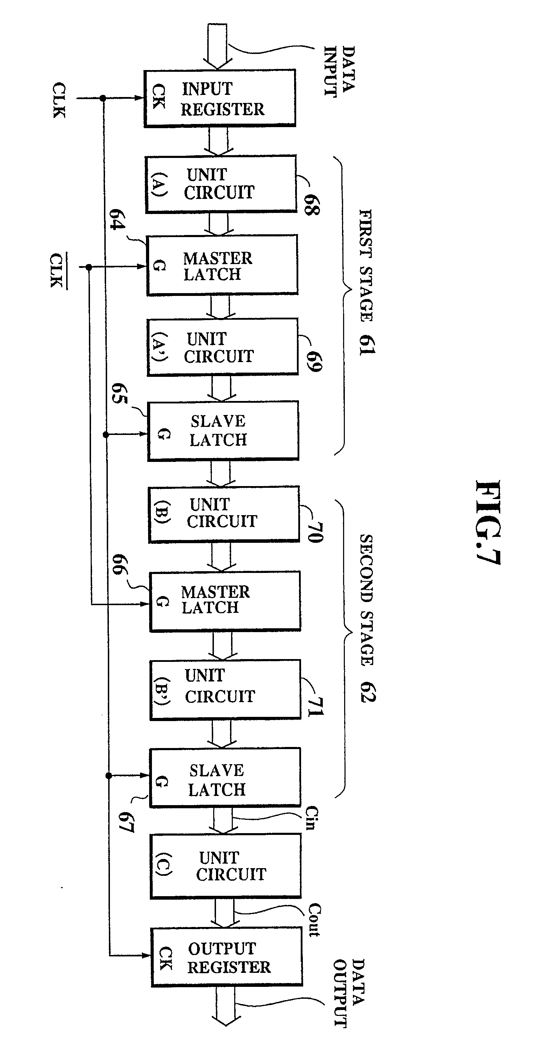

Fig. 7 is a block diagram of a digital signal processing device of a third embodiment according to the present invention. In this embodiment, the master slave latch structure as the present invention is applied to the first stage 61 and the second stage as the next stage.

In the same diagram, the first stage comprises an unit circuit 68, a master latch 64, an unit circuit 69, and a slave latch 65. The master latch is incorporated between the unit circuits 68 and 69. The slave latch 65 is provided between the unit circuit 69 and the second stage 62.

Similarly, the second stage is made up of a circuit unit 70, a master latch 66, an unit circuit 71, and a slave latch 67. The master latch is provided between the circuit units 70 and 71. The slave latch 67 is incorporated at the rear portion of the unit circuit 71.

Further, the master latches 64 and 66 of the first and second stages are executed by the clock signal, on the other hand, the slave latches 65 and 67 are operated by a reversed clock signal as a reversed phase of the clock signal.

In the digital signal processing device having the above described structure, the delay time of each stage is so equal to each other that the delay time of the digital signal processing device of the first embodiment as shown in Fig. 1 can further be reduced by the present embodiment.

The structure of the present embodiment can be most applied to the case that a delay time of a stage of a pipeline type digital signal processing device is changed by an instruction and a kind of data.

The scope of this invention is not limited to preceding embodiments such as the master slave structure but includes many modifications which will be obvious to one skilled in the art.

Various modification will become possible for those skilled in the art after the teaching of the present disclosure without departing from the scope thereof.

Reference signs in the claims are intended for better understanding and shall not limit the scope.

## Claims

1. A pipeline type digital signal processing device having a plurality of pipeline stages in which at least one of the pipeline stages, comprising:
   a first unit circuit (22a) ;
   a second unit circuit (22b) located at a rear portion of the first unit circuit (22a);
   a first latch means (30a) located between the first unit circuit (22a) and the second unit circuit (22b); and
   a second latch means (30b) installed between the the second unit circuit (22b) and a next stage (24) and an output of the first latch means (30a) is given to the second unit circuit (22b),
   wherein an output of the second unit circuit (22b) is applied to the second latch means (30b), an operation of the first latch means (30a) is controlled by a first clock signal and an operation of the second latch means (30b) is controlled by a second clock signal which is a reversed clock signal as a reversed phase of the first clock signal.

2. A pipeline type digital signal processing device according to claim 1, wherein all of the output of the first unit circuit (22a) is given into the first latch means (30a).

3. A pipeline type digital signal processing device according to claim 1, wherein a part of the output of the first unit circuit (52) is given into the first latch means (54) and the remaining output of it is applied directly to the next stage (56) through a register incorporated between the first unit circuit (52) and the next stages (56), and an output of the first latch means is given to the second latch means (55) through the second unit circuit (53) incorporated between the first and the second latch means (54 and 55).

4. A pipeline type digital signal processing device according to claim 1, wherein a maximum delay time of the second unit circuit (22b) is shorter than that of the first unit circuit (22a).

5. A pipeline type digital signal processing device according to claim 1, wherein the first and second latch means (30a and 30b) comprises

a transparent latch.

**FIG.1**

DATA
INPUT

CK | INPUT
REGISTER
7

CLK

UNIT
CIRCUIT
(A)
1

CK | REGISTER
9

UNIT
CIRCUIT
(B)
3

CK | REGISTER
11

UNIT
CIRCUIT
(C)
5

CK | OUTPUT
REGISTER
13

DATA
OUTPUT

FIG.2

# FIG.3

EP 0 438 126 A2

|  | $\phi 1$ | $\phi 2$ | $\phi 3$ | $\phi 4$ | $\phi 5$ |
|---|---|---|---|---|---|
| MASTER LATCH | LOCKED | THROUGH | LOCKED | THROUGH | LOCKED |
| SLAVE LATCH | THROUGH | LOCKED | THROUGH | LOCKED | THROUGH |

CLOCK SIGNAL (CLK)

Tdr

Bin

Td,B

Bout

Tdr

B'in

TdB'

B'out

Tdr

Cin

Td,C

Cout

Tsetup

9

# FIG.4

DATA INPUT

$\overline{G}$

G

DATA OUTPUT

G

$\overline{G}$

# FIG.5

FIG.6

EP 0 438 126 A2

FIG.7

DATA INPUT

CLK

INPUT REGISTER — CK

UNIT CIRCUIT (A) — 68

MASTER LATCH — G — 64

UNIT CIRCUIT (A') — 69

SLAVE LATCH — G — 65

FIRST STAGE 61

UNIT CIRCUIT (B) — 70

MASTER LATCH — G — 66

UNIT CIRCUIT (B') — 71

SLAVE LATCH — G — 67

SECOND STAGE 62

UNIT CIRCUIT (C) — Cin

OUTPUT REGISTER — CK — Cout

DATA OUTPUT

CLK

13